# EUROPEAN PATENT SPECIFICATION

(11) **EP 4 549 475 B1**
(45) Date of publication and mention of the grant of the patent: **21.10.2026**
(21) Application number: 23831270.6
(22) Date of filing: 22.06.2023
(51) Int. Cl.: C08F 220/36, C08F 265/06, C08F 290/00, C08F 290/12, C09D 11/101, C09D 4/06, C09D 151/00

(54) **ACTIVE ENERGY RAY-CURABLE COMPOSITION, ACTIVE ENERGY RAY-CURABLE INK, AND PRINTED OBJECT PRODUCTION METHOD**
DURCH AKTIVENERGIESTRAHLUNG HÄRTBARE ZUSAMMENSETZUNG, DURCH AKTIVENERGIESTRAHLUNG HÄRTBARE TINTE UND HERSTELLUNGSVERFAHREN FÜR GEDRUCKTE OBJEKTE
COMPOSITION DE TYPE À DURCISSEMENT PAR RAYONNEMENT ACTINIQUE, ENCRE DE TYPE À DURCISSEMENT PAR RAYONNEMENT ACTINIQUE, ET PROCÉDÉ DE FABRICATION D'OBJET IMPRIMÉ

(30) Priority: 29.06.2022 JP 2022104226; 22.12.2022 JP 2022205296
(43) Date of publication of application: 07.05.2025
(73) Proprietor: Toray Industries, Inc., Tokyo 103-8666 (JP)
(72) Inventor: TSUJI, Yuichi, Otsu-shi, Shiga 520-8558 (JP); SADAKUNI, Hironobu, Otsu-shi, Shiga 520-8558 (JP); MATOBA, Yoshie, Otsu-shi, Shiga 520-8558 (JP); INOUE, Takejiro, Otsu-shi, Shiga 520-8558 (JP)
(74) Representative: Kador & Partner Part mbB
(86) International application number: PCT/JP2023/023192
(87) International publication number: WO 2024/004826

(56) References cited:
- WO-A1-2006/129665
- WO-A2-2007/143659
- JP-A- 2004 027 050
- JP-A- 2019 163 398
- JP-A- 2022 070 220
- JP-A- S4 994 736
- US-A1- 2015 152 211

## Description

### TECHNICAL FIELD

The present invention relates to an active energy ray-curable composition, an active energy ray-curable ink, and a printed material production method.

### BACKGROUND ART

As the global population increases, demand for flexible packaging, which is mainly used for packaging food and daily necessities, is expected to continue to grow. By gravure printing, which is currently the mainstream in flexible packaging printing, printed materials with vivid appearance can be obtained. On the other hand, since the gravure printing uses an ink containing a large amount of solvent, a large amount of energy is required for drying an ink solvent and an exhaust treatment, and an environmental load is large. In addition, in recent years, there has been a demand for a reduction in volatile components contained in an ink in order to deal with environmental issues and carbon neutral.

For this reason, use of an active energy ray-curable method, in which an ink does not contain a volatile component and is instantaneously cured by irradiation with an active energy ray, has been advanced in offset printing, flexographic printing, and in-line anchor coating and overcoating related to these printing (Patent Documents 1 and 2). In the flexible packaging printing, roll-to-roll printing is performed, and hence the quick-drying property of the ink and coating agent is important. In addition to environmental advantages, the active energy ray-curable method provides energy saving and high productivity because a drying step is shortened while no heat energy is used.

However, since the main raw material of the active energy ray-curable composition is acrylates in general, cured products obtained by radical polymerization of acrylates, that is, poly(meth)acrylates, have low adhesion to main films such as polyolefins, polyesters, and polyamides (nylons). Therefore, the cured film of the active energy ray-curable composition has problems such as peeling in post-processing and insufficient strength of a product.

### PRIOR ART DOCUMENT

### PATENT DOCUMENTS

Patent Document 1: Japanese Patent Laid-open Publication No. 2019-104180
Patent Document 2: Japanese Patent Laid-open Publication No. 2019-198970
Patent Document 3: Japanese Patent Laid-open Publication No. 2021-98773

### SUMMARY OF THE INVENTION

### PROBLEMS TO BE SOLVED BY THE INVENTION

Therefore, studies have been made to improve adhesion to a film by providing a highly adhesive layer on the film side as in Patent Document 3. However, since the cost inevitably increases and the usable film is limited, the invention disclosed in Patent Document 3 has a problem in versatility.

An object of the present invention is therefore to provide an active energy ray-curable composition that is capable of demonstrating sufficient adhesion to a film that does not have a highly adhesive layer.

### SOLUTIONS TO THE PROBLEMS

The present invention is an active energy ray-curable composition containing a mono- to tetrafunctional (meth)acrylate (A) having a tertiary amino group, and a compound (B) having a weight-average molecular weight of 3,000 or more and 100,000 or less and having a carboxy group, in which a ratio, n_{c}(B)/nₐ(A), between a number of moles n_{c}(B) of the carboxy group derived from the compound (B) and a number of moles nₐ(A) of the amino group derived from the (meth)acrylate (A) is 0.01 or more and 0.50 or less.

The present invention also provides an active energy ray-curable ink in which the active energy ray-curable composition of the present invention further contains a pigment.

The present invention also provides a printed material production method, the method including transferring the active energy ray-curable composition of the present invention or the active energy ray-curable ink of the present invention to a film and then irradiating the film with an active energy ray.

### EFFECTS OF THE INVENTION

With the active energy ray-curable composition or the active energy ray-curable ink according to the present invention, sufficient adhesion to a film that does not have a highly adhesive layer can be exhibited.

### EMBODIMENT OF THE INVENTION

Hereinafter, the present invention will be specifically described. In the present invention, "or more" means the same as or more than the numerical value indicated there. In addition, "or less" means the same as or less than the numerical value indicated there. In addition, "(meth)acrylate" is a generic name including an acrylate and a methacrylate, and a "(meth)acryloyl group" is a generic name including an acryloyl group and a methacryloyl group. In addition, "n-functional (meth)acrylate" and "(meth)acrylate is n-functional" mean that the number of (meth)acryloyl groups of the (meth)acrylate is n.

The active energy ray-curable composition of the present invention contains a mono- to tetrafunctional (meth)acrylate having a tertiary amino group. Hereinafter, the (meth)acrylate is also referred to as a (meth)acrylate (A). The (meth)acrylate (A) is cured by irradiation with an active energy ray to form a film, and the tertiary amino group strongly interacts with a polar group such as a hydroxy group, particularly a carboxy group, on the film surface, thereby improving the adhesion of the active energy ray-curable composition cured film to the film. This is because the adhesion-improving effect is exhibited only by having a tertiary amino group and a (meth)acryloyl group in the same compound. For example, when a tertiary amine having no (meth)acryloyl group and a (meth)acrylate are mixed and cured with an active energy ray, since both compounds are not covalently bonded, the interaction between the (meth)acrylate cross-linked product in the cured film and the film surface is not strengthened, and the adhesion is not improved.

The (meth)acrylate (A) is preferably monofunctional or bifunctional. When the (meth)acrylate (A) is penta- or higher functional, cure shrinkage of the active energy ray-curable composition is large, and adhesion is impaired.

The (meth)acrylate (A) is preferably a compound represented by Structural Formula (1) below.

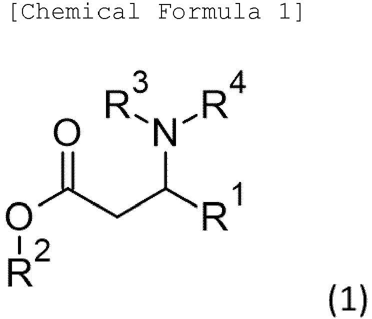

Here, R¹ represents H or a methyl group, R² represents a monovalent organic group having a (meth)acryloyl group, and R³ and R⁴ each independently represent a monovalent hydrocarbon group or a monovalent organic group containing a heteroatom.

The (meth)acrylate (A) is more preferably a compound represented by Structural Formula (2) or (3) below.

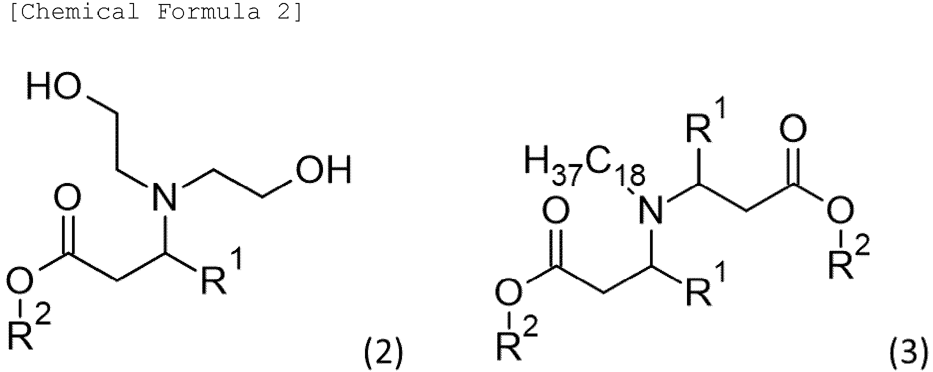

Here, R¹ represents H or a methyl group, and R² represents a monovalent organic group having a (meth)acryloyl group.

The (meth)acrylate (A) is preferably a compound represented by Structural Formula (4) below.

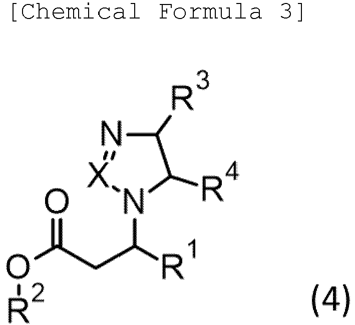

Here, X represents a nitrogen atom or a carbon atom, R¹ represents H or a methyl group, R² represents a monovalent organic group having a (meth)acryloyl group, and R³ and R⁴ each independently represent a monovalent hydrocarbon group or a monovalent organic group containing a heteroatom. R³ and R⁴ are independent of each other or are integrated to form a cyclic group.

The amine value of the (meth)acrylate (A) is preferably 80 mg KOH/g or more for achieving strong interaction with various carboxy groups to improve adhesion. In addition, in order to impart compatibility with other compounds, the amine value of the (meth)acrylate (A) is preferably 400 mg KOH/g or less, more preferably 357 mg KOH/g or less.

Here, the amine value is represented by the number of milligrams of potassium hydroxide equivalent to hydrochloric acid required for neutralizing amino groups contained in 1 g of a sample, and can be measured by a method in accordance with ASTM D2074.

The (meth)acrylate (A) is obtained by a Michael addition reaction of a primary or secondary amine to a polyfunctional (meth)acrylate. Since the (meth)acryloyl group is an α-β unsaturated carbonyl compound, a primary or secondary amine is added by 1,4-conjugate addition to form a 3-aminopropionate structure. When the amino group in the structure after the reaction is a secondary amino group, there is the possibility that the amino group is further reacted again to be converted to a tertiary amine. This reaction is a nucleophilic reaction, and the higher the nucleophilicity, the milder the conditions can be in which the reaction proceeds. In addition, an acid and a base can act as catalysts to cause the reaction to proceed at a lower temperature and at a higher speed.

Specifically, in the case of performing a Michael addition reaction, the reaction is preferably performed at a temperature of 20 to 100°C or less. In the reaction between the polyfunctional (meth)acrylate and the amine, when all the (meth)acryloyl groups in one molecule react with the amine, the compound is not cured with active energy rays, so that the equivalent ratio of the (meth)acryloyl groups is preferably more than that of the amino groups. On the other hand, in order to increase the amine equivalent, it is also preferable to introduce a plurality of tertiary amino groups into a tri- or higher functional, preferably tetra- or higher polyfunctional (meth)acrylate. In addition, when a bi- or higher functional polyamine is used as the amine as a raw material, crosslinking with the polyfunctional (meth)acrylate may cause gelation, which is not preferable from the viewpoint of reaction control. In addition, it is preferable to take measures such as gradually adding the amine to the polyfunctional (meth)acrylate by dropping or the like at the time of synthesis because the desired (meth)acrylate (A) can be easily obtained.

As the polyfunctional (meth)acrylate as a raw material for the Michael addition reaction, a (meth)acryloyl group needs to remain even after the reaction, and thus, in principle, a polyfunctional (meth)acrylate is used. A monofunctional (meth)acrylate is unsuitable because a (meth)acryloyl group disappears when Michael addition is performed.

Specific examples of the bifunctional (meth)acrylate as a raw material for the Michael addition reaction include 1,6-hexanediol di(meth)acrylate, 1,9-nonanediol di(meth)acrylate, 1,10-decanediol di(meth)acrylate, bisphenol A di(meth)acrylate, diethylene glycol di(meth)acrylate, triethylene glycol di(meth)acrylate, polyethylene glycol di(meth)acrylate, tripropylene glycol di(meth)acrylate, polypropylene glycol di(meth)acrylate, 1,3-butylene glycol di(meth)acrylate, neopentyl glycol di(meth)acrylate, trimethylolpropane di(meth)acrylate, glycerin di(meth)acrylate, pentaerythritol di(meth)acrylate, diglycerin di(meth)acrylate, ditrimethylolpropane di(meth)acrylate, tricyclodecane dimethanol di(meth)acrylate, and ethylene oxide adducts, propylene oxide adducts, and tetraethylene oxide adducts thereof.

Examples of the trifunctional (meth)acrylate as a raw material for the Michael addition reaction include trimethylolpropane tri(meth)acrylate, pentaerythritol tri(meth)acrylate, ditrimethylolpropane tri(meth)acrylate, glycerin tri(meth)acrylate, isocyanuric acid tri(meth)acrylate, ditrimethylolpropane tri(meth)acrylate, and ethylene oxide adducts, propylene oxide adducts, and tetraethylene oxide adducts thereof.

Examples of the tetrafunctional (meth)acrylate as a raw material for the Michael addition reaction include ditrimethylolpropane tetra(meth)acrylate, diglycerin tetra(meth)acrylate, ditrimethylolpropane tetra(meth)acrylate, and ethylene oxide adducts and propylene oxide adducts thereof.

Examples of the penta- or higher functional (meth)acrylate as a raw material for the Michael addition reaction include dipentaerythritol penta(meth)acrylate, dipentaerythritol hexa(meth)acrylate, and ethylene oxide adducts and propylene oxide adducts thereof. In particular, when a hexa- or higher functional (meth)acrylate is used, it is preferable to set the equivalent ratio such that two or more functional groups react with the amine.

Specific examples of the primary amine as a raw material for the Michael addition reaction include, as the monoamine, an alkylamine having 1 to 20 carbon atoms, an alkanolamine having 1 to 10 carbon atoms, and a derivative thereof. Specific examples of the secondary amine include N-alkyl-substituted products (1 to 20 carbon atoms) of the monoamines, N-alkanol-substituted products (1 to 10 carbon atoms) of the monoamines, cyclic amines such as morpholine, pyrrolidine, and piperidine, derivatives other than these N-substituted products, 1H-azoles such as 1H-triazole, 1H-benzotriazole, 1H-benzimidazole, 1H-imidazole, and 1H-pyrazole, and derivatives obtained by substituting sites other than 1H. These polyamines can also be used, but control for suppressing gelation is required.

Among these primary and secondary amines, amines having faint odor are preferable, and particularly octadecylamine and diethanolamine are also preferable because they can be used as raw materials in laws and regulations related to food packaging represented by Swiss Ordinance and the like.

In addition, adducts of 1H-azoles having a heterocyclic ring, such as 1H-triazole, 1H-benzotriazole, 1H-benzimidazole, and 1H-imidazole, are particularly preferable because of the effect of improving adhesion.

Among these primary and secondary amines, the Michael addition reaction of a highly nucleophilic aliphatic amine proceeds under relatively mild conditions of 20 to 60°C. On the other hand, since the reaction of an aromatic amine having low nucleophilicity proceeds slowly, it is preferable that the Michael addition reaction be performed under heating to 80 to 100°C.

When the (meth)acrylate (A) is synthesized using the particularly preferable diethanolamine described above, a compound represented by Structural Formula (2) above is obtained, and when the (meth)acrylate (A) is synthesized using octadecylamine, a compound represented by Structural Formula (3) above is obtained. When the (meth)acrylate (A) is synthesized using a 1H-azole, a compound represented by Structural Formula (4) above is obtained.

As the (meth)acrylate (A), a commercially available product may be used, and examples thereof include "EBECRYL" (registered trademark) LEO 10101, "EBECRYL" (registered trademark) LEO 10551, "EBECRYL" (registered trademark) LEO 10552, "EBECRYL" (registered trademark) LEO 10553, "EBECRYL" (registered trademark) 80, "EBECRYL" (registered trademark) 81, "EBECRYL" (registered trademark) 83, "EBECRYL" (registered trademark) 85, "EBECRYL" (registered trademark) 880, and "EBECRYL" (registered trademark) 7100 manufactured by Daicel-Allnex Ltd., "ETERCURE" (registered trademark) 63922 manufactured by Eternal Materials Co., Ltd., CN549NS, CN550, and CN551NS from Sartomer, "AgiSyn" (registered trademark) 701, "AgiSyn" (registered trademark) 701P, "AgiSyn" (registered trademark) 703, and "AgiSyn" (registered trademark) 703TF from DSM, and "Miramer" (registered trademark) AS1000, "Miramer" (registered trademark) AS3500, "Miramer" (registered trademark) LR3600, Photocryl A104, and Photocryl DP143 manufactured by Miwon Specialty Chemical Co., Ltd.

The molecular weight of the (meth)acrylate (A) is preferably 1,000 or less from the viewpoint of improving curability with active energy rays and suppressing an increase in viscosity of the active energy ray-curable composition of the present invention. The molecular weight is more preferably 600 or less.

The (meth)acrylate (A) is preferably contained in the active energy ray-curable composition in an amount of 20 mass% or more and 60 mass% or less. When the content of the (meth)acrylate (A) is 20 mass% or more, more preferably 30 mass% or more, film adhesion is improved. In addition, since the content of the (meth)acrylate (A) is 60 mass% or less, it is possible to cope with the case where another functional material such as a coloring material is contained, the case where an initiator or a sensitizer is added according to an active energy ray source, the case where a resin, an oligomer, an auxiliary agent, or the like is added for adjusting the viscoelasticity of the active energy ray-curable composition, and the like depending on the application.

The active energy ray-curable composition of the present invention contains a compound having a weight-average molecular weight of 3,000 or more and 100,000 or less and having a carboxy group. Hereinafter, the compound is also referred to as a compound (B). The carboxy group of the compound (B) interacts with the tertiary amino group of the (meth)acrylate (A) to improve the film formability and film strength of the cured film of the active energy ray-curable composition.

The compound (B) preferably has a (meth)acryloyl group and/or a vinyl group. Since the compound (B) also interacts with the (meth)acrylate (A) to be crosslinked, the compound (B) having a photosensitive group as described above improves curability with active energy rays and also improves cured film strength and adhesion.

In the active energy ray-curable composition of the present invention, the ratio, n_{c}(B)/nₐ(A), between the number of moles n_{c}(B) of carboxy groups derived from the compound (B) to the number of moles nₐ(A) of tertiary amino groups derived from the (meth)acrylate (A) is 0.01 or more and 0.50 or less. When the ratio n_{c}(B)/nₐ(A) is 0.01 or more, the film formability and the film strength of the cured film of the active energy ray-curable composition can be effectively improved. When the ratio n_{c}(B)/nₐ(A) is 0.50 or less, more preferably 0.30 or less, still more preferably 0.15 or less, adhesion can be effectively improved by interaction between the tertiary amino groups and the polar groups on the film surface.

The active energy ray-curable composition of the present invention preferably also contains a polyfunctional (meth)acrylate not containing an epoxy group, an acid anhydride, an isocyanate group, or an amino group. Hereinafter, the (meth)acrylate is also referred to as a (meth)acrylate (C).

The (meth)acrylate (C) is cured by irradiation with an active energy ray and contributes to film formation. The (meth)acrylate (C) is preferably one having high reactivity from the viewpoint of curability. From the viewpoint of safety and environment, it is preferable that the volatility be low. The low volatility refers to a weight loss ratio of 1 wt.% or less when heated at 110°C for 1 hour as defined by Method 24 of the United States Environmental Protection Agency (EPA).

Specific examples of a bifunctional (meth)acrylate (C) as the (meth)acrylate (C) include 1,6-hexanediol di(meth)acrylate, 1,9-nonanediol di(meth)acrylate, 1,10-decanediol di(meth)acrylate, diethylene glycol di(meth)acrylate, triethylene glycol di(meth)acrylate, polyethylene glycol di(meth)acrylate, tripropylene glycol di(meth)acrylate, polypropylene glycol di(meth)acrylate, 1,3-butylene glycol di(meth)acrylate, neopentyl glycol di(meth)acrylate, trimethylolpropane di(meth)acrylate, glycerin di(meth)acrylate, pentaerythritol di(meth)acrylate, diglycerin di(meth)acrylate, ditrimethylolpropane di(meth)acrylate, tricyclodecane dimethanol di(meth)acrylate, and ethylene oxide adducts, propylene oxide adducts, and tetraethylene oxide adducts thereof.

Examples of a trifunctional (meth)acrylate (C) include trimethylolpropane tri(meth)acrylate, pentaerythritol tri(meth)acrylate, ditrimethylolpropane tri(meth)acrylate, glycerin tri(meth)acrylate, isocyanuric acid tri(meth)acrylate, ditrimethylolpropane tri(meth)acrylate, and ethylene oxide adducts, propylene oxide adducts, and tetraethylene oxide adducts thereof.

Examples of a tetrafunctional (meth)acrylate (C) include ditrimethylolpropane tetra(meth)acrylate, diglycerin tetra(meth)acrylate, ditrimethylolpropane tetra(meth)acrylate, and ethylene oxide adducts and propylene oxide adducts thereof.

Examples of a penta- or higher functional (meth)acrylate (C) include dipentaerythritol penta(meth)acrylate, dipentaerythritol hexa(meth)acrylate, and ethylene oxide adducts and propylene oxide adducts thereof.

The active energy ray-curable composition of the present invention preferably contains a (meth)acrylate (D) having at least one of an epoxy group, an acid anhydride, and an isocyanate group. By doing so, the adhesion to the film is further improved. This is considered to be because the (meth)acrylate (A) has a tertiary amino group and acts as a catalyst to bond any of an epoxy group, an acid anhydride, and an isocyanate group in the (meth)acrylate (D) and a polar group such as a hydroxy group and a carboxy group on the film surface under mild conditions by condensation or an addition reaction.

Specific examples of the (meth)acrylate (D) include glycidyl (meth)acrylate, glycidyl crotonate, glycidyl isocrotonate, maleic anhydride, (meth)acryloyl isocyanate, (meth)acryloylethyl isocyanate, and 1,1-(bisacryloyloxymethyl)ethyl isocyanate.

The active energy ray-curable composition of the present invention may contain other components described later other than the (meth)acrylate (A), the compound (B), the (meth)acrylate (C), and the (meth)acrylate (D). However, it is preferable that the other components do not have an acidic group. This is because the acidic group may interact with the (meth)acrylate (A) to inhibit improvement in adhesion.

The active energy ray-curable composition of the present invention preferably contains a colored pigment. The active energy ray-curable composition can thus be used as an active energy ray-curable ink.

Examples of the colored pigment include phthalocyanine-based pigments, soluble azo-based pigments, insoluble azo-based pigments, lake pigments, quinacridone-based pigments, isoindoline-based pigments, threne-based pigments, metal complex-based pigments, titanium oxide, zinc oxide, alumina white, calcium carbonate, barium sulfate, red iron oxide, cadmium red, chrome yellow, zinc yellow, Prussian blue, ultramarine blue, oxide-coated glass powder, oxide-coated mica, oxide-coated metal particles, aluminum powder, gold powder, silver powder, copper powder, zinc powder, stainless steel powder, nickel powder, organic bentonite, iron oxide, carbon black, and graphite.

As the pigment, mica (hydrous aluminum potassium silicate), talc (magnesium silicate salt), and the like, which are colorless extender pigments, can also be used, and the active energy ray-curable composition of the present invention can also be used as varnish or an anchor coating agent.

As the pigment, a neutral or basic pigment in which the (meth)acrylate (A) is not adsorbed to the surface thereof is preferably used.

The active energy ray-curable composition of the present invention may contain a photopolymerization initiator according to the active energy ray source. As the photopolymerization initiator, for example, α-aminoalkylphenones, thioxanthones, benzyl ketals, and acylphosphine oxides can be used.

In the active energy ray-curable composition of the present invention, additives such as wax, a pigment dispersant, an antifoaming agent, and a leveling agent can be used as other components.

In addition, a solvent may be used for adjusting the viscosity, but the curability of the active energy ray-curable composition of the present invention with active energy rays is deteriorated by containing the solvent.

The acrylic equivalent of the active energy ray-curable composition of the present invention is preferably 150 g/eq or more and 500 g/eq or less. When the acrylic equivalent is 150 g/eq or more, more preferably 200 g/eq or more, still more preferably 250 g/eq or more, the storage stability is improved. When the acrylic equivalent is 500 g/eq or less, more preferably 450 g/eq or less, still more preferably 400 g/eq or less, curability with active energy rays is improved. In the present invention, the acrylic equivalent refers to the number of grams (unit: g/eq) of the active energy ray-curable composition required for the amount of (meth)acryloyl groups contained in the active energy ray-curable composition to be 1 mol.

The active energy ray-curable composition of the present invention can also be used as an anchor coating agent transferred onto a film on which an active energy ray-curable ink is then transferred, or can also be used as an overcoating agent transferred onto a film after an active energy ray-curable ink is transferred in a pattern onto the film.

The active energy ray-curable composition of the present invention can also be used as the active energy ray-curable ink containing a colored pigment. That is, the active energy ray-curable ink of the present invention is obtained by adding a pigment to the active energy ray-curable composition of the present invention.

Next, a method for producing the active energy ray-curable composition of the present invention will be described.

The active energy ray-curable composition of the present invention can be obtained by mixing the (meth)acrylate (A), the compound (B), and if necessary, the (meth)acrylate (C) and other components at room temperature to 80°C.

After or during mixing, defoaming is preferably performed under vacuum or reduced pressure.

When a colored pigment is added to form an ink, it is also preferable to add the pigment at the time of mixing and then disperse and knead the mixture with an attritor, a ball mill, a sand mill, a three roll mill, or the like depending on the viscosity.

The printed material production method of the present invention includes transferring the active energy ray-curable composition or the active energy ray-curable ink of the present invention to a film and then irradiating the film with an active energy ray.

Examples of the film used in the present invention include polyesters such as polyethylene, polypropylene, polyethylene terephthalate, polybutylene terephthalate, and polylactic acid, polyamides, polyimides, polyalkyl (meth)acrylates, polystyrene, poly(α-methylstyrene), polycarbonates, polyvinyl alcohol, polyvinyl acetal, polyvinyl chloride, and polyvinylidene fluoride.

In addition, such a film further provided with a vapor-deposited thin film layer made of metal such as alumina or a metal compound is also used.

The surface of the film is preferably subjected to corona treatment because the polar functional groups on the surface of the film increase, and the adhesion to the active energy ray-curable composition or the active energy ray-curable ink is improved.

The film whose surface has been subjected to corona treatment may be a ready-made product, or a film may be subjected to in-line corona treatment before the active energy ray-curable composition or the active energy ray-curable ink is transferred to the film.

The film may have a highly adhesive coating layer, but the cost increases. The active energy ray-curable composition or the active energy ray-curable ink of the present invention is suitable because sufficient adhesion to a film that does not have a highly adhesive layer can be exhibited.

As the shape of the film, either a sheetfed film or a roll film can be used. When a thin film for flexible packaging is used, it is preferable to use a roll film and perform roll-to-roll coating and printing.

Examples of the method for transferring the active energy ray-curable composition or the active energy ray-curable ink of the present invention to the film include flexographic printing, offset printing, gravure printing, screen printing, inkjet printing, a varnish coater, a bar coater, and the like. The transfer method is selected depending on the viscosity of the active energy ray-curable composition or the active energy ray-curable ink, and whether or not patterning is required.

Specifically, if patterning is required, printing methods such as flexographic printing, offset printing, gravure printing, screen printing, and inkjet printing are preferable. In the case of the whole surface coating, it is preferable to use a varnish coater or a bar coater. In terms of viscosity, offset printing or screen printing is preferable when the viscosity is a high viscosity of 5 Pa·s or more and 200 Pa·s or less, flexographic printing is preferable when the viscosity is 0.1 Pa·s to 5 Pa·s, and gravure printing or inkjet printing is preferable when the viscosity is 0.1 Pa·s or less. Within the viscosity range, it is generally preferable that the viscosity is low because the leveling property is good and the appearance of the coated material is good.

By the irradiation with the active energy ray, the (meth)acryloyl group reacts and is crosslinked by a covalent bond, whereby the active energy ray-curable composition or the active energy ray-curable ink is instantaneously cured.

Examples of the active energy ray source used in the present invention include ultraviolet rays, electron beams, and gamma rays.

In the case of ultraviolet rays, an ultraviolet irradiation device such as a high-pressure mercury lamp, a xenon lamp, a metal halide lamp, and a light emitting diode (LED) is preferably used. Among them, an LED lamp that saves power and generates less ozone is preferable. As for the wavelength of the LED, a bright line having a wavelength of 350 to 420 nm is preferable from the viewpoint of power saving and cost reduction.

In the case of electron beams, the (meth)acryloyl group is directly radical-excited, and radical polymerization proceeds in the active energy ray-curable composition to form a coat. In addition, electron beams have a high penetrating property and can also act on the film. When the film is a polyolefin, radicals are easily generated, and a reaction such as crosslinking between molecules and decomposition occurs, and radical polymerization proceeds between the active energy ray-curable composition and the film, so that covalent bonds are formed between the active energy ray-curable composition and the film, and higher adhesion can be exhibited. In particular, electron beams with a low acceleration voltage are preferable because electron beams do not require special qualification at the time of use and are easy to handle.

Since the penetration depth of the electron beam is determined by the acceleration voltage, the acceleration voltage is preferably 50 kV to 300 kV from the viewpoint of a sufficient penetrating property and damage to the film. The irradiation dose of the electron beam is preferably 10 kGy or more and 100 kGy or less because the amount of radical species generated in the target substance increases but the damage of the film also increases.

### EXAMPLES

Hereinafter, the present invention will be specifically described with reference to examples. However, the present invention is not limited only thereto.

### [Measurement and evaluation methods]

### (1) Viscosity

A cylinder spindle No. 4 was attached to a B-type viscometer (DV-II manufactured by AMETEK Brookfield (BROOKFIELD)), and the viscosity of each active energy ray-curable composition at 25°C and 0.5 rpm was measured. From the viewpoint of coating performance and printability, the viscosity is preferably 100 Pa·s or less, more preferably 50 Pa·s or less.

### (2) Amine value

The amine value was measured by a method based on ASTM D2074. An ethanol solution of each (meth)acrylate (A) was prepared, the potential difference was measured with a 0.2-N hydrochloric acid ethanol solution using a potentiometric titrator, and the inflection point of the obtained titration curve was regarded as the end point. Then, the amount of hydrochloric acid consumed until the inflection point was reached was converted to the potassium hydroxide equivalent.

### (3) Acrylic equivalent

A CDCl₃ solution of each active energy ray-curable composition with a concentration of 1 mass% was prepared, 0.05 mass% of tetramethylsilane as an internal standard was added, the container was sealed, and ¹H-NMR measurement was performed. The molar ratio was determined from the integration ratio of the peak (δ: 5.8 to 6.5) of the (meth)acrylic group and the peak (δ: -0.05 to +0.05) of the methyl group of tetramethylsilane as an internal standard, and the number of moles of the acrylic groups in the coating agent was calculated to calculate the acrylic equivalent.

### (4) Appearance of coating film

The appearance of the coated material with the active energy ray-curable composition or the active energy ray-curable ink obtained in each of examples and comparative examples was visually evaluated as follows.
A: The irregularities were small, no void print or the like was observed, and a good appearance was obtained.
B: A little void print and the like were observed in some portions.
C: The irregularities were large, and void print and the like were observed throughout the entire coated material.

### (5) Peel strength

A mixing adhesive for lamination ("Takelac" (registered trademark) A626/"Takenate" (registered trademark) A50 manufactured by Mitsui Chemicals, Inc.) was applied to the coated material with the active energy ray-curable composition or the active energy ray-curable ink obtained in the coating step in each of the examples and the comparative examples so as to achieve a coating amount of 3.0 g/m², and the resulting product was laminated with a 60 µm-thick cast polypropylene film (CPP) (ZK-207 manufactured by TORAY ADVANCED FILM Co., Ltd.). Thereafter, aging was performed at 40°C for 3 days to obtain a laminate sample. The portion in the resulting laminate sample coated with the active energy ray-curable composition was cut into a strip shape with a width of 15 mm, and a peel test was performed using a Tensilon universal tester (RTG-1210 manufactured by ORIENTEC CORPORATION) to measure the peel strength when the strip was peeled off at 90° at 300 mm/min.

When the peel strength was less than 1.5 N/15 mm, the adhesion was judged to be insufficient, when the peel strength was 1.5 N/15 mm or more and less than 2.0 N/15 mm, the adhesion was judged to be good, when the peel strength was 2.0 N/15 mm or more and less than 3.0 N/15 mm, the adhesion was judged to be considerably good, and when the peel strength was 3.0 N/15 mm or more, the adhesion was judged to be extremely good.

### (6) Fracture mode

In the peel test of the section (5), the state (fracture mode) at the time of peeling was also observed. In the laminate sample having a multilayer structure, an interlayer where breakage occurs at the time of peeling corresponds to a portion where adhesion is the weakest. The fracture mode was evaluated according to the following A to C.
A: The film was broken.
B: The active energy ray-curable composition layer showed a cohesive failure.
C: Peeling was caused between layers of the film/active energy ray-curable composition.

Here, the "active energy ray-curable composition layer" refers to a layer formed by curing the active energy ray-curable composition or ink. The above A is most preferable, the above B is next preferable, and the above C is not preferable.

### [(Meth)acrylate (A)]

The corresponding primary or secondary amine and polyfunctional (meth)acrylate in the following were weighed, and mixed and stirred at 60°C for 4 hours with a mechanical stirrer to allow the Michael addition reaction to proceed, thereby providing an active energy ray-curable composition containing the corresponding (meth)acrylate (A).
(A)-1: A bi- or trifunctional (meth)acrylate obtained by the Michael addition reaction of diethanolamine (manufactured by Wakenyaku Co., Ltd.) to pentaerythritol triacrylate ("Miramer" (registered trademark) M340 manufactured by Miwon Specialty Chemical Co., Ltd.) at an equivalent ratio of 5 : 2. Amine value: 159 mg KOH/g.
(A)-2: A bi- or trifunctional (meth)acrylate obtained by the Michael addition reaction of di(2-ethylhexyl)amine (manufactured by Wakenyaku Co., Ltd.) to ditrimethylolpropane tetraacrylate ("Miramer" (registered trademark) M410 manufactured by Miwon Specialty Chemical Co., Ltd.) at an equivalent ratio of 2 : 1. Amine value: 118 mg KOH/g.
(A)-3: A bifunctional (meth)acrylate obtained by the Michael addition reaction of di(2-ethylhexyl)amine (manufactured by Wakenyaku Co., Ltd.) to EO-modified trimethylolpropane triacrylate ("Miramer" (registered trademark) M3190 manufactured by Miwon Specialty Chemical Co., Ltd.) at an equivalent ratio of 2 : 1. Amine value: 79 mg KOH/g.
(A)-4: A mono- or bifunctional (meth)acrylate obtained by the Michael addition reaction of octadecylamine (manufactured by Tokyo Chemical Industry Co., Ltd.) to tricyclodecane dimethanol diacrylate ("EBECRYL" (registered trademark) 130 manufactured by Daicel-Allnex Ltd.) at an equivalent ratio of 2 : 1. Amine value: 96 mg KOH/g.
(A)-5: Dimethylaminoethyl methacrylate (manufactured by Tokyo Chemical Industry Co., Ltd.). The (meth)acrylate (A)-5 is a monofunctional (meth)acrylate. Amine value: 357 mg KOH/g.
(A)-6: A tetra- or pentafunctional (meth)acrylate obtained by the Michael addition reaction of 1H-benzotriazole (manufactured by Wakenyaku Co., Ltd.) to dipentaerythritol hexaacrylate ("Miramer" (registered trademark) M600 manufactured by Miwon Specialty Chemical Co., Ltd.) at an equivalent ratio of 3 : 1. Amine value: 135 mg KOH/g.
(A)-7: A bi- or trifunctional (meth)acrylate obtained by the Michael addition reaction of 1H-benzimidazole (manufactured by Wakenyaku Co., Ltd.) to ditrimethylolpropane tetraacrylate ("Miramer" (registered trademark) M410 manufactured by Miwon Specialty Chemical Co., Ltd.) at an equivalent ratio of 4 : 1. Amine value: 96 mg KOH/g.

[Compound (B) or alternative thereof]
(B)-1: Acrylic resin having a photosensitive group and a carboxylic acid (TWR-1001 manufactured by Toray Industries, Inc.). Molecular weight: 30,000, acid value: 105 mg KOH/g.
(B)-2: Acrylic resin having a carboxylic acid (TWR-3001 manufactured by Toray Industries, Inc.). Molecular weight: 27,000, acid value: 200 mg KOH/g.
(b)-3: Adipic acid (manufactured by Wakenyaku Co., Ltd.), molecular weight: 146.

### [(Meth)acrylate (C)]

(C)-1: EO-modified trimethylolpropane triacrylate ("Miramer" (registered trademark) M3190 manufactured by Miwon Specialty Chemical Co.**,** Ltd.).
(C)-2: Ditrimethylolpropane tetraacrylate ("Miramer" (registered trademark) M410 manufactured by Miwon Specialty Chemical Co., Ltd.).
(C)-3: Tricyclodecane dimethanol diacrylate ("EBECRYL" (registered trademark) 130 manufactured by Daicel-Allnex Ltd.).

### [Compound (D)]

(D)-1: 1,1-(Bisacryloyloxymethyl)ethyl isocyanate ("Karenz" (registered trademark) BEI manufactured by Showa Denko K.K.).

### [Other (meth)acrylates]

(E)-1: A penta- or higher functional (meth)acrylate having a tertiary amino group obtained by the Michael addition reaction of di(2-ethylhexyl)amine (manufactured by Wakenyaku Co., Ltd.) to dipentaerythritol hexaacrylate ("Miramer" (registered trademark) M600 manufactured by Miwon Specialty Chemical Co., Ltd.) at an equivalent ratio of 6 : 1. Amine value: 66 mg KOH/g.

### [Other additive components]

Pigment 1: Titanium oxide ("TIPAQUE" (registered trademark) CR58-2 manufactured by Ishihara Sangyo Kaisha, Ltd.)
Pigment 2: Acidic carbon black ("MOGUL" (registered trademark) E manufactured by CABOT Corporation)
Surfactant 1: "EMALEX" (registered trademark) 503 manufactured by Nihon Emulsion Co., Ltd.
Surfactant 2: "DISPERBYK" (registered trademark) 111 manufactured by BYK Chemie Ltd. Japan
Surfactant 3: "DISPERBYK" (registered trademark) 2013 manufactured by BYK Chemie Ltd. Japan
Photopolymerization initiator: Bis(2,4,6-trimethylbenzoyl)-phenylphosphine oxide ("IRGACURE" (registered trademark) 819 manufactured by BASF SE).

### [Active energy ray-curable composition or active energy ray-curable ink]

### (Active energy ray-curable compositions 1 to 16)

Materials were weighed at the composition shown in Table 1, and dissolved and dispersed using a hybrid mixer (manufactured by THINKY CORPORATION) to provide an active energy ray-curable composition.

**[Table 1-1]**

| | | | Active energy ray-curable composition | | | | | | | |
|---|---|---|---|---|---|---|---|---|---|---|
| | | | 1 | 2 | 3 | 4 | 5 | 6 | 7 | 8 |
| Composition (parts by mass) | (Meth)acrylate (A) | (A)-1 | 35 | 0 | 0 | 17 | 26 | 43 | 61 | 38 |
| | | (A)-2 | 0 | 0 | 25 | 0 | 0 | 0 | 0 | 0 |
| | | (A)-3 | 0 | 0 | 23 | 0 | 0 | 0 | 0 | 0 |
| | | (A)-4 | 0 | 0 | 0 | 0 | 0 | 0 | 0 | 10 |
| | | (A)-5 | 0 | 45 | 0 | 0 | 0 | 0 | 0 | 0 |
| | | (A)-6 | 0 | 0 | 0 | 0 | 0 | 0 | 0 | 0 |
| | | (A)-7 | 0 | 0 | 0 | 0 | 0 | 0 | 0 | 0 |
| | Compound (3) or alternative (b) thereof | (B)-1 | 10 | 10 | 10 | 10 | 10 | 10 | 10 | 8 |
| | | (B)-2 | 0 | 0 | 0 | 0 | 0 | 0 | 0 | 0 |
| | | (b)-3 | 0 | 0 | 0 | 0 | 0 | 0 | 0 | 0 |
| | (Meth)acrylate (C) | (C)-1 | 18 | 20 | 20 | 38 | 34 | 25 | 18 | 17 |
| | | (C)-2 | 0 | 0 | 0 | 0 | 0 | 0 | 0 | 0 |
| | | (C)-3 | 36 | 24 | 21 | 34 | 29 | 16 | 10 | 26 |
| | (Meth)acrylate (D) | (D)-1 | 0 | 0 | 0 | 0 | 0 | 0 | 0 | 0 |
| | Other (meth)acrylates | (E)-1 | 0 | 0 | 0 | 0 | 0 | 0 | 0 | 0 |
| | Surfactant 1 | | 1 | 1 | 1 | 1 | 1 | 1 | 1 | 1 |
| **Physical** property | Viscosity (Pa·s) | | 44.8 | 10.7 | 38.6 | 15.3 | 22.7 | 61.3 | 109.4 | 36.0 |
| | n_{c}(3)/n₁(A) | | 0.19 | 0.07 | 0.22 | 0.39 | 0.25 | 0.14 | 0.11 | 0.12 |
| | Acrylic equivalent | | 181 | 181 | 239 | 194 | 192 | 187 | 183 | 188 |

**[Table 1-2]**

| | | | Active energy ray-curable composition | | | | | | | |
|---|---|---|---|---|---|---|---|---|---|---|
| | | | 9 | 10 | 11 | 12 | 13 | 14 | 15 | 16 |
| Composition (parts by mass) | (Meth)acrylate (A) | (A)-1 | 0 | 0 | 35 | 38 | 20 | 30 | 0 | 0 |
| | | (A) -2 | 0 | 0 | 0 | 0 | 0 | 12 | 24 | 0 |
| | | (A) -3 | 0 | 0 | 0 | 0 | 0 | 0 | 0 | 0 |
| | | (A) -4 | 0 | 0 | 0 | 0 | 35 | 0 | 0 | 0 |
| | | (A) -5 | 0 | 0 | 0 | 0 | 0 | 0 | 0 | 0 |
| | | (A)-6 | 57 | 0 | 0 | 0 | 0 | 0 | 0 | 0 |
| | | (A)-7 | 0 | 57 | 0 | 0 | 0 | 0 | 0 | 0 |
| | Compound (3) or alternative (b) thereof | (B)-1 | 10 | 10 | 10 | 0 | 0 | 0 | 0 | 10 |
| | | (B)-2 | 0 | 0 | 0 | 14 | 0 | 0 | 14 | 0 |
| | | (b)-3 | 0 | 0 | 0 | 0 | 0 | 4 | 0 | 0 |
| | (Meth) acrylate (C) | (C)-1 | 0 | 0 | 18 | 15 | 0 | 30 | 28 | 15 |
| | | (C)-2 | 12 | 12 | 0 | 10 | 22 | 12 | 20 | 22 |
| | | (C)-3 | 20 | 20 | 26 | 22 | 22 | 11 | 13 | 0 |
| | (Meth)acrylate (D) | (D)-1 | 0 | 0 | 10 | 0 | 0 | 0 | 0 | 0 |
| | Other (meth)acrylates | (E)-1 | 0 | 0 | 0 | 0 | 0 | 0 | 0 | 52 |
| | Surfactant 1 | | 1 | 1 | 1 | 1 | 1 | 1 | 1 | 1 |
| Physical property | Viscosity (Pa·s) | | 49.7 | 46.1 | 43.6 | 65.5 | 3.8 | 6.2 | 58.3 | 69.9 |
| | n_{c}(3)/n₁(A) | | 0.13 | 0.19 | 0.19 | 0.46 | 0.00 | 0.50 | 0.99 | 0.29 |
| | Acrylic equivalent | | 187 | 183 | 197 | 188 | 174 | 184 | 208 | 138 |

### (Active energy ray-curable inks 1 to 9, 11 to 13, 16, and 17)

The pigments, the (meth)acrylates, and other additive components were weighed at compositions shown in Table 2, and kneaded and dispersed using a three roll mill ("EXAKT" (registered trademark) M-80S manufactured by EXAKT Technologies, Inc.) to provide active energy ray-curable inks 1 to 9, 11 to 13, 16, and 17 of a high viscosity type.

### (Active energy ray-curable inks 10, 14, and 15)

The pigments, the (meth)acrylates, and other additive components were weighed at compositions shown in Table 2 and dispersed using a batch-type sand mill (manufactured by Hayashi Shoten Co., Ltd.) to provide active energy ray-curable inks 10, 14, and 15 of a low viscosity type.

**[Table 2-1]**

| | | | Active energy ray-curable ink | | | | | | | |
|---|---|---|---|---|---|---|---|---|---|---|
| | | | 1 | 2 | 3 | 4 | 5 | 6 | 7 | 8 |
| Composition (parts by mass) | (Meth)acrylate (A) | (A)-1 | 28 | 0 | 0 | 0 | 15 | 21 | 37 | 48 |
| | | (A)-2 | 0 | 0 | 0 | 10 | 0 | 0 | 0 | 0 |
| | | (A)-3 | 0 | 0 | 24 | 15 | 0 | 0 | 0 | 0 |
| | | (A)-4 | 0 | 0 | 0 | 0 | 0 | 0 | 0 | 0 |
| | | (A)-5 | 0 | 22 | 0 | 0 | 0 | 0 | 0 | 0 |
| | | (A)-6 | 0 | 0 | 0 | 0 | 0 | 0 | 0 | 0 |
| | Compound (3) or alternative (b) thereof | (B)-1 | 6 | 6 | 6 | 6 | 6 | 6 | 6 | 6 |
| | | (B)-2 | 0 | 0 | 0 | 0 | 0 | 0 | 0 | 0 |
| | | (b)-3 | 0 | 0 | 0 | 0 | 0 | 0 | 0 | 0 |
| | (Meth) acrylate (C) | (C)-1 | 0 | 10 | 10 | 23 | 18 | 12 | 3 | 0 |
| | | (C)-2 | 0 | 0 | 0 | 0 | 0 | 0 | 0 | 0 |
| | | (C)-3 | 20 | 16 | 14 | 0 | 15 | 15 | 8 | 0 |
| | Pigment 1 | | 45 | 45 | 45 | 45 | 45 | 45 | 45 | 45 |
| | Pigment 2 | | 0 | 0 | 0 | 0 | 0 | 0 | 0 | 0 |
| | Surfactant 2 | | 1 | 1 | 1 | 1 | 1 | 1 | 1 | 1 |
| | Surfactant 3 | | 0 | 0 | 0 | 0 | 0 | 0 | 0 | 0 |
| | Photopolymerization initiator | | 0 | 0 | 0 | 0 | 0 | 0 | 0 | 0 |
| Physical property | Viscosity (Pa·s) | | 46.6 | 36.0 | 37.3 | 40.2 | 22.9 | 41.5 | 72.8 | 137.0 |
| | n_{c}(B)/nₐ(A) | | 0.14 | 0.08 | 0.33 | 0.26 | 0.26 | 0.15 | 0.11 | 0.08 |
| | Acrylic equivelent | | 314 | 333 | 462 | 506 | 354 | 340 | 324 | 321 |

**[Table 2-2]**

| | | | Active energy ray-curable ink | | | | | | | | |
|---|---|---|---|---|---|---|---|---|---|---|---|
| | | | 9 | 10 | 11 | 12 | 13 | 14 | 15 | 16 | 17 |
| Composition (parts by mass) | (Meth)acrylate (A) | (A)-1 | 20 | 22 | 0 | 24 | 30 | 0 | 16 | 0 | 25 |
| | | (A)-2 | 0 | 0 | 0 | 0 | 0 | 0 | 5 | 0 | 0 |
| | | (A)-3 | 0 | 0 | 0 | 0 | 0 | 0 | 0 | 20 | 0 |
| | | (A)-4 | 10 | 0 | 0 | 0 | 0 | 25 | 0 | 0 | 0 |
| | | (A)-5 | 0 | 0 | 0 | 0 | 0 | 0 | 0 | 0 | 0 |
| | | (A)-6 | 0 | 0 | 28 | 0 | 0 | 0 | 0 | 0 | 0 |
| | Compound (3) or alternative (b) thereof | (B)-1 | 5 | 2 | 6 | 0 | 10 | 0 | 0 | 0 | 6 |
| | | (B)-2 | 0 | 0 | 0 | 7 | 0 | 0 | 0 | 6 | 0 |
| | | (b)-3 | 0 | 0 | 0 | 0 | 0 | 0 | 2 | 0 | 0 |
| | (Meth)acrylate (C) | (C)-1 | 5 | 5 | 10 | 0 | 7 | 0 | 20 | 18 | 0 |
| | | (C)-2 | 0 | 3 | 0 | 3 | 9 | 15 | 6 | 10 | 0 |
| | | (C)-3 | 14 | 32 | 10 | 20 | 25 | 15 | 5 | 0 | 18 |
| | Pigment 1 | | 45 | 35 | 45 | 45 | 0 | 45 | 45 | 45 | 45 |
| | Pigment 2 | | 0 | 0 | 0 | 0 | 18 | 0 | 0 | 0 | 0 |
| | Surfactant 2 | | 1 | 1 | 1 | 1 | 0 | 0 | 1 | 1 | 1 |
| | Surfactant 3 | | 0 | 0 | 0 | 0 | 1 | 0 | 0 | 0 | 0 |
| | Photopolymerization initiator | | 0 | 0 | 0 | 0 | 0 | 0 | 0 | 0 | 5 |
| Physical property | Viscosity (Pa·s) | | 42.6 | 3.1 | 48.4 | 50.5 | 64.4 | 2.3 | 5.2 | 41.0 | 49.9 |
| | n_{c}(3)/nₐ(A) | | 0.13 | 0.06 | 0.16 | 0.37 | 0.22 | 0.00 | 0.49 | 0.75 | 0.16 |
| | Acrylic equivalent | | 355 | 250 | 387 | 325 | 209 | 323 | 342 | 452 | 349 |

### [Film]

Film 1: 12 µm-thick PET film (E5102 manufactured by TOYOBO CO., LTD.), with a corona treatment layer.
Film 2: 12 µm-thick PET film (FS2000 manufactured by FUTAMURA CHEMICAL CO., LTD.), without a surface treatment. Film 3: 15 µm-thick polyamide film (ON manufactured by UNITIKA LTD.), with a corona treatment layer.
Film 4: 12 µm-thick barrier film/PET film laminate (1011HG SBR2 manufactured by TORAY ADVANCED FILM Co., Ltd.), without a corona treatment layer.
Film 5: 20 µm-thick OPP film (P2111 manufactured by TOYOBO CO., LTD.), with a corona treatment layer.
Film 6: 12 µm-thick PET film ("Lumirror" (registered trademark) S10 manufactured by Toray Industries, Inc.), without a surface treatment.

### [Method for producing coated material]

### (Method 1 for producing coated material)

Various active energy ray-curable compositions or active energy ray-curable inks were transferred onto various films. As the transfer method, a No. 5 count bar coater was used in the case of an active energy ray-curable composition containing no pigment, and an RI tester was used in the case of an active energy ray-curable ink containing a pigment. Then, using an electron beam irradiation apparatus (EC250/30/90LS manufactured by Iwasaki Electric Co., Ltd.), curing was performed by electron beam irradiation at an acceleration voltage of 110 kV and an irradiation dose of 30 kGy.

### (Method 2 for producing coated material)

Various active energy ray-curable inks were transferred onto various films. As the transfer method, an RI tester was used. Then, the resultant was cured by LED-UV irradiation at an irradiation intensity of 8 W/cm² and an irradiation wavelength of 385 nm using an LED ultraviolet irradiation apparatus (UD90 manufactured by Panasonic Industrial Devices SUNX Co., Ltd.).

### (Method 3 for producing coated material)

Various films were subjected to corona treatment using a corona treatment apparatus (TEC-4AX manufactured by Kasuga Denki, Inc.) under the condition of a discharge amount E of 200 W·min/m², and then various active energy ray-curable inks were transferred. As the transfer method, an RI tester was used. Then, using an electron beam irradiation apparatus (EC250/30/90LS manufactured by Iwasaki Electric Co., Ltd.), curing was performed by electron beam irradiation at an acceleration voltage of 110 kV and an irradiation dose of 30 kGy.

### [Example 1]

Using the active energy ray-curable composition 1 as the active energy ray-curable composition and the film 1 as the film, a coated material with the active energy ray-curable composition was produced by the method 1 for producing a coated material. The laminate peel strength was as extremely good as 3.4 N/15 mm, the fracture mode was as good as (A), and the appearance of the coated material was also good. The results are shown in Table 3.

### [Examples 2 to 12 and Comparative Examples 1 to 4]

Using the active energy ray-curable compositions 2 to 16 as the active energy ray-curable composition as shown in Table 3 and the film 1 as the film, a coated material with the active energy ray-curable composition was produced by the method 1 for producing a coated material. In Examples 2 to 12, the laminate peel strength was all good or more. In particular, Examples 6 to 11 in which the ratio n_{c}(B)/nₐ(A), the acrylic equivalent, and the amine value were within preferable ranges were extremely good. Among them, in Examples 8 to 11 in which the viscosity was not high, the appearance of the coated material was also good. In Comparative Examples 1 to 4, both the laminate peel strength and the fracture mode were insufficient. The results are shown in Table 3.

### [Examples 13 to 25 and Comparative Examples 5 to 7]

Using the active energy ray-curable inks 1 to 16 as the active energy ray-curable ink as shown in Table 4 and the film 1 as the film, a printed material with the active energy ray-curable ink was produced by the method 1 for producing a coated material. In Examples 13 to 25, the laminate peel strength was all good or more. In particular, Examples 13 and 19 to 23 in which the ratio n_{c}(B)/nₐ(A), the acrylic equivalent, and the amine value were within preferable ranges were extremely good. Among them, in Examples 13 and 21 to 23 in which the viscosity was not high, the appearance of the coated material was also good. In Comparative Examples 5 to 7, both the laminate peel strength and the fracture mode were insufficient. The results are shown in Table 4.

### [Examples 26 to 30]

Using the active energy ray-curable ink 10 as the active energy ray-curable ink and the films 2 to 6 as the film as shown in Table 5, a printed material with the active energy ray-curable ink was produced by the method 1 for producing a coated material. The laminate peel strength was good or more for any of the films and was extremely good particularly for the corona-treated film. The results are shown in Table 5.

### [Examples 31 and 32]

Using the active energy ray-curable ink 17 as the active energy ray-curable ink and the films 1 and 2 as the film as shown in Table 5, a printed material with the active energy ray-curable ink was produced by UV curing according to the method 2 for producing a coated material. The laminate peel strength was good or more for both films and was extremely good particularly for the corona-treated film 1.

### [Examples 33 and 34]

Using the active energy ray-curable ink 10 as the active energy ray-curable ink and the films 2 and 4 as the film as shown in Table 5, a printed material with the active energy ray-curable ink was produced by the method 3 for producing a coated material. The corona treatment made the laminate peel strength extremely good for both films. The results are shown in Table 5.

**[Table 3]**

| | Example | | | | | | | | | | | | Comparative Example | | | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 1 | 2 | 3 | 4 |
| Active energy ray-curable composition | 1 | 2 | 3 | 4 | 5 | 6 | 7 | 8 | 9 | 10 | 11 | 12 | 13 | 14 | 15 | 16 |
| Film | 1 | 1 | 1 | 1 | 1 | 1 | 1 | 1 | 1 | 1 | 1 | 1 | 1 | 1 | 1 | 1 |
| Method for producing coated material | 1 | 1 | 1 | 1 | 1 | 1 | 1 | 1 | 1 | 1 | 1 | 1 | 1 | 1 | 1 | 1 |
| Appearance of coating film | A | A | A | A | A | B | C | A | A | A | A | B | A | A | B | B |
| Peel strength (N/15mm) | 3.4 | 2.0 | 2.6 | 1.7 | 2.4 | 4.0 | 4.5 | 3.3 | 5.2 | 5.1 | 5.6 | 2.6 | 0.3 | 0.3 | 1.0 | 1.4 |
| Fracture mode | A | B | B | B | B | A | A | A | A | A | A | B | C | C | C | C |

**[Table 4]**

| | Example | | | | | | | | | | | | | Comparative Example | | |
|---|---|---|---|---|---|---|---|---|---|---|---|---|---|---|---|---|
| | 13 | 14 | 15 | 16 | 17 | 18 | 19 | 20 | 21 | 22 | 23 | 24 | 25 | 5 | 6 | 7 |
| Active energy ray-curable ink | 1 | 2 | 3 | 4 | 5 | 6 | 7 | 8 | 9 | 10 | 11 | 12 | 13 | 14 | 15 | 16 |
| Film | 1 | 1 | 1 | 1 | 1 | 1 | 1 | 1 | 1 | 1 | 1 | 1 | 1 | 1 | 1 | 1 |
| Method for producing coated material | 1 | 1 | 1 | 1 | 1 | 1 | 1 | 1 | 1 | 1 | 1 | 1 | 1 | 1 | 1 | 1 |
| Appearance of coating film | A | A | A | A | A | A | B | C | A | A | A | A | A | A | A | A |
| Peel strength (N/15mm) | 3.5 | 2.0 | 2.2 | 2.2 | 1.9 | 2.5 | 3.8 | 4.2 | 4.0 | 3.3 | 5.2 | 2.2 | 1.9 | 0.3 | 0.2 | 1.1 |
| Fracture mode | A | B | B | B | B | A | A | A | A | A | A | B | B | C | C | C |

**[Table 5]**

| | Example | | | | | | | | |
|---|---|---|---|---|---|---|---|---|---|
| | 26 | 27 | 28 | 29 | 30 | 31 | 32 | 33 | 34 |
| Active energy ray-curable ink | 10 | 10 | 10 | 10 | 10 | 17 | 17 | 10 | 10 |
| Film | 2 | 3 | 4 | 5 | 6 | 1 | 2 | 2 | 4 |
| Method for producing coated material | 1 | 1 | 1 | 1 | 1 | 2 | 2 | 3 | 3 |
| Appearance of coating film | A | A | A | A | A | A | A | A | A |
| Peel strength (N/15mm) | 1.9 | 3.3 | 2.5 | 3.7 | 2.2 | 3.1 | 2.8 | 3.3 | 3.4 |
| Fracture mode | B | A | B | A | B | A | A | A | A |

## Claims

1. An active energy ray-curable composition comprising: a mono- to tetrafunctional (meth)acrylate (A) having a tertiary amino group; and a compound (B) having a weight-average molecular weight of 3,000 or more and 100,000 or less and having a carboxy group, wherein a ratio, n_{c}(B)/nₐ(A), between a number of moles n_{c}(B) of the carboxy group derived from the compound (B) and a number of moles nₐ(A) of the tertiary amino group derived from the (meth)acrylate (A) is 0.01 or more and 0.50 or less.

2. The active energy ray-curable composition according to claim 1, wherein the (meth)acrylate (A) is represented by Structural Formula (1): 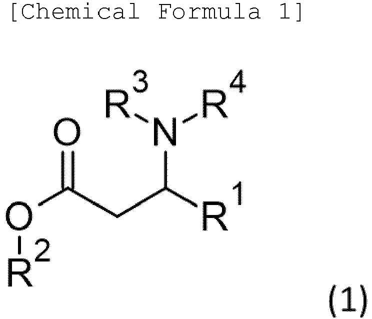 where R¹ represents H or a methyl group, R² represents a monovalent organic group having a (meth)acryloyl group, and R³ and R⁴ each independently represent a monovalent hydrocarbon group or a monovalent organic group containing a heteroatom.

3. The active energy ray-curable composition according to claim 1 or 2, wherein the (meth)acrylate (A) has an amine value of 80 mg KOH/g or more.

4. The active energy ray-curable composition according to any one of claims 1 to 3, wherein an acrylic equivalent of the active energy ray-curable composition is 150 g/eq or more and 500 g/eq or less.

5. The active energy ray-curable composition according to any one of claims 1 to 4, wherein the (meth)acrylate (A) is contained in an amount of 20 mass% or more and 60 mass% or less in the active energy ray-curable composition.

6. The active energy ray-curable composition according to any one of claims 1 to 5, wherein the (meth)acrylate (A) is represented by Structural Formula (2) or (3): 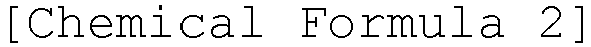 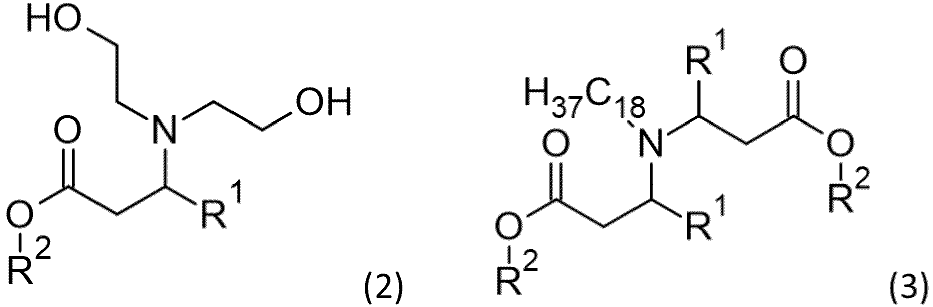 where R¹ represents H or a methyl group, and R² represents a monovalent organic group having a (meth)acryloyl group.

7. The active energy ray-curable composition according to any one of claims 1 to 5, wherein the (meth)acrylate (A) is represented by Structural Formula (4): 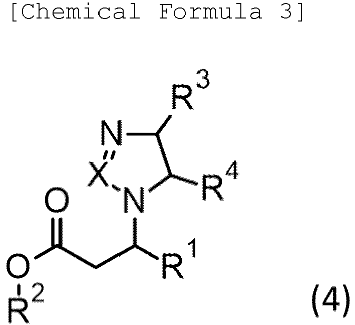 where X represents a nitrogen atom or a carbon atom, R¹ represents H or a methyl group, R² represents a monovalent organic group having a (meth)acryloyl group, and R³ and R⁴ each independently represent a monovalent hydrocarbon group or a monovalent organic group containing a heteroatom, and R³ and R⁴ are independent of each other or are integrated to form a cyclic group.

8. The active energy ray-curable composition according to any one of claims 1 to 7, wherein the compound (B) has a (meth)acryloyl group and/or a vinyl group.

9. The active energy ray-curable composition according to any one of claims 1 to 8, further comprising a polyfunctional (meth)acrylate (C) not containing an epoxy group, an acid anhydride, an isocyanate group, or an amino group.

10. The active energy ray-curable composition according to any one of claims 1 to 9, further comprising a (meth)acrylate (D) having at least one of an epoxy group, an acid anhydride, and an isocyanate group.

11. The active energy ray-curable composition according to any one of claims 1 to 10, wherein a component contained other than the (meth)acrylate (A), the compound (B), the (meth)acrylate (C), and the (meth)acrylate (D) does not have an acidic group.

12. An active energy ray-curable ink comprising: the active energy ray-curable composition according to any one of claims 1 to 11; and a pigment.

13. A printed material production method comprising: transferring the active energy ray-curable composition according to any one of claims 1 to 11 or the active energy ray-curable ink according to claim 12 to a film; and then irradiating the film with an active energy ray.

14. The printed material production method according to claim 13, wherein a surface of the film has been subjected to corona treatment.

## Patentansprüche

1. Zusammensetzung, härtbar durch einen aktiven Energiestrahl, umfassend: ein mono- bis tetrafunktionelles (Meth)acrylat (A), das eine tertiäre Aminogruppe aufweist; und eine Verbindung (B), die ein gewichtsmittleres Molekulargewicht von 3.000 oder mehr und 100.000 oder weniger aufweist und eine Carboxygruppe aufweist, wobei ein Verhältnis n_{c}(B)/nₐ(A) zwischen einer Molzahl n_{c}(B) der Carboxygruppe, die von der Verbindung (B) abgeleitet ist, und einer Molzahl nₐ(A) der tertiären Aminogruppe, die von dem (Meth)acrylat (A) abgeleitet ist, 0,01 oder mehr und 0,50 oder weniger beträgt.

2. Zusammensetzung, härtbar durch einen aktiven Energiestrahl, nach Anspruch 1, wobei das (Meth)acrylat (A) durch Strukturformel (1) dargestellt wird: 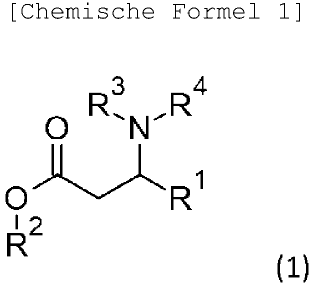 wobei R¹ H oder eine Methylgruppe darstellt, R² eine einwertige organische Gruppe darstellt, die eine (Meth)acryloylgruppe aufweist, und R³ und R⁴ jeweils unabhängig eine einwertige Kohlenwasserstoffgruppe oder eine einwertige organische Gruppe darstellen, die ein Heteroatom enthält.

3. Zusammensetzung, härtbar durch einen aktiven Energiestrahl, nach Anspruch 1 oder 2, wobei das (Meth)acrylat (A) einen Aminwert von 80 mg KOH/g oder mehr aufweist.

4. Zusammensetzung, härtbar durch einen aktiven Energiestrahl, nach einem der Ansprüche 1 bis 3, wobei ein Acryläquivalent der Zusammensetzung, die durch einen aktiven Energiestrahl härtbar ist, 150 g/eq oder mehr und 500 g/eq oder weniger beträgt.

5. Zusammensetzung, härtbar durch einen aktiven Energiestrahl, nach einem der Ansprüche 1 bis 4, wobei das (Meth)acrylat (A) in einer Menge von 20 Masse-% oder mehr und 60 Masse-% oder weniger in der Zusammensetzung, die durch einen aktiven Energiestrahl härtbar ist, enthalten ist.

6. Zusammensetzung, härtbar durch einen aktiven Energiestrahl, nach einem der Ansprüche 1 bis 5, wobei das (Meth)acrylat (A) durch Strukturformel (2) oder (3) dargestellt wird: 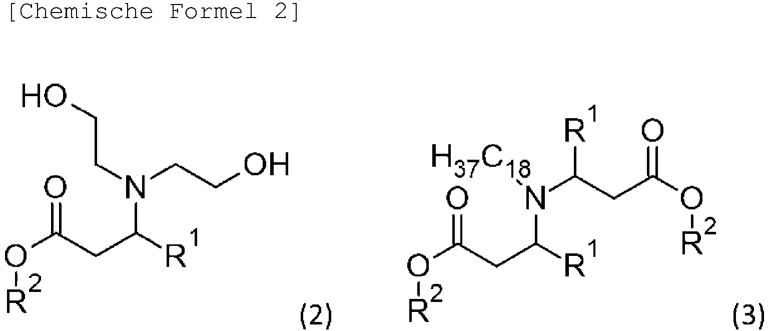 wobei R¹ H oder eine Methylgruppe darstellt und R² eine einwertige organische Gruppe darstellt, die eine (Meth)acryloylgruppe aufweist.

7. Zusammensetzung, härtbar durch einen aktiven Energiestrahl, nach einem der Ansprüche 1 bis 5, wobei das (Meth)acrylat (A) durch Strukturformel (4) dargestellt wird: 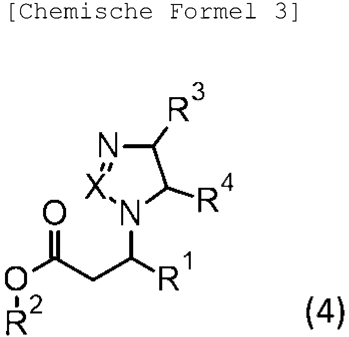 wobei X ein Stickstoffatom oder ein Kohlenstoffatom darstellt, R¹ H oder eine Methylgruppe darstellt, R² eine einwertige organische Gruppe darstellt, die eine (Meth)acryloylgruppe aufweist, und R³ und R⁴ jeweils unabhängig eine einwertige Kohlenwasserstoffgruppe oder eine einwertige organische Gruppe darstellen, die ein Heteroatom enthält, und R³ und R⁴ voneinander unabhängig sind oder integriert sind, um eine cyclische Gruppe zu bilden.

8. Zusammensetzung, härtbar durch einen aktiven Energiestrahl, nach einem der Ansprüche 1 bis 7, wobei die Verbindung (B) eine (Meth)acryloylgruppe und/oder eine Vinylgruppe aufweist.

9. Zusammensetzung, härtbar durch einen aktiven Energiestrahl, nach einem der Ansprüche 1 bis 8, ferner umfassend ein polyfunktionelles (Meth)acrylat (C), das keine Epoxygruppe, kein Säureanhydrid, keine Isocyanatgruppe oder keine Aminogruppe enthält.

10. Zusammensetzung, härtbar durch einen aktiven Energiestrahl, nach einem der Ansprüche 1 bis 9, ferner umfassend ein (Meth)acrylat (D), das mindestens eines von einer Epoxygruppe, einem Säureanhydrid und einer Isocyanatgruppe aufweist.

11. Zusammensetzung, härtbar durch einen aktiven Energiestrahl, nach einem der Ansprüche 1 bis 10, wobei eine Komponente, die außer dem (Meth) acrylat (A), der Verbindung (B), dem (Meth)acrylat (C) und dem (Meth)acrylat (D) enthalten ist, keine saure Gruppe aufweist.

12. Tinte, härtbar durch einen aktiven Energiestrahl, umfassend: die Zusammensetzung, die durch einen aktiven Energiestrahl härtbar ist, nach einem der Ansprüche 1 bis 11; und ein Pigment.

13. Verfahren zur Herstellung eines bedruckten Materials, umfassend: Übertragen der Zusammensetzung, die durch einen aktiven Energiestrahl härtbar ist, nach einem der Ansprüche 1 bis 11 oder der Tinte, die durch einen aktiven Energiestrahl härtbar ist, nach Anspruch 12 auf einen Film; und anschließendes Bestrahlen des Films mit einem aktiven Energiestrahl.

14. Verfahren zur Herstellung eines bedruckten Materials nach Anspruch 13, wobei eine Oberfläche des Films einer Corona-Behandlung unterzogen worden ist.

## Revendications

1. Composition durcissable par rayonnement actinique comprenant : un (méth)acrylate (A) mono- à tétrafonctionnel ayant un groupe amino tertiaire ; et un composé (B) ayant une masse moléculaire moyenne en poids supérieure ou égale à 3 000 et inférieure ou égale à 100 000 et ayant un groupe carboxyle, dans laquelle un rapport, n_{c}(B)/nₐ(A), entre un nombre de moles n_{c}(B) du groupe carboxyle dérivé du composé (B) et un nombre de moles nₐ(A) du groupe amino tertiaire dérivé du (méth)acrylate (A) est de 0,01 ou plus et de 0,50 ou moins.

2. Composition durcissable par rayonnement actinique selon la revendication 1, dans laquelle le (méth)acrylate (A) est représenté par la formule structurale (1) : 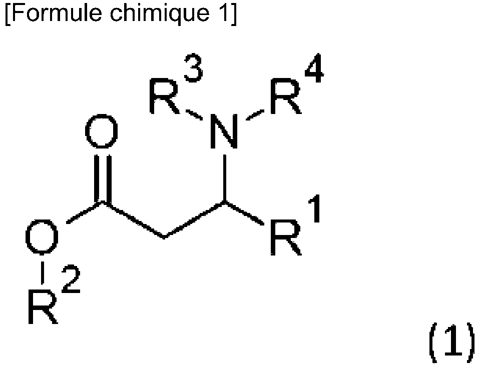 dans laquelle R¹ représente H ou un groupe méthyle, R² représente un groupe organique monovalent ayant un groupe (méth)acryloyle, et R³ et R⁴ représentent chacun indépendamment un groupe hydrocarboné monovalent ou un groupe organique monovalent contenant un hétéroatome.

3. Composition durcissable par rayonnement actinique selon la revendication 1 ou 2, dans laquelle le (méth)acrylate (A) a un indice d'amine de 80 mg de KOH/g ou plus.

4. Composition durcissable par rayonnement actinique selon l'une quelconque des revendications 1 à 3, dans laquelle un équivalent acrylique de la composition durcissable par rayonnement actinique est de 150 g/éq ou plus et de 500 g/éq ou moins.

5. Composition durcissable par rayonnement actinique selon l'une quelconque des revendications 1 à 4, dans laquelle le (méth)acrylate (A) est contenu en une quantité de 20 % en masse ou plus et de 60 % en masse ou moins dans la composition durcissable par rayonnement actinique.

6. Composition durcissable par rayonnement actinique selon l'une quelconque des revendications 1 à 5, dans laquelle le (méth)acrylate (A) est représenté par la formule structurale (2) ou (3) : 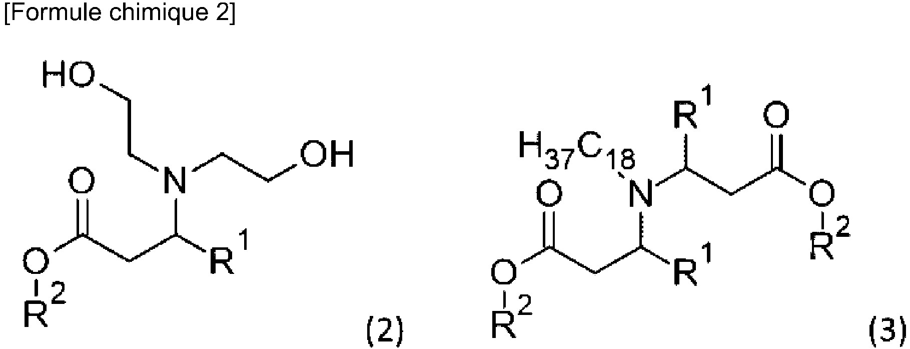 où R¹ représente H ou un groupe méthyle, et R² représente un groupe organique monovalent ayant un groupe (méth)acryloyle.

7. Composition durcissable par rayonnement actinique selon l'une quelconque des revendications 1 à 5, dans laquelle le (méth)acrylate (A) est représenté par la formule structurale (4) : 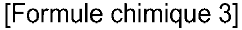 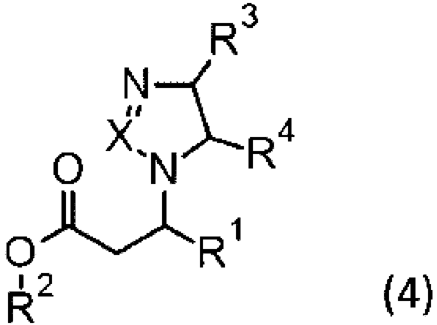 dans laquelle X représente un atome d'azote ou un atome de carbone, R¹ représente H ou un groupe méthyle, R² représente un groupe organique monovalent ayant un groupe (méth)acryloyle, et R³ et R⁴ représentent chacun indépendamment un groupe hydrocarboné monovalent ou un groupe organique monovalent contenant un hétéroatome, et R³ et R⁴ sont indépendants l'un de l'autre ou sont intégrés pour former un groupe cyclique.

8. Composition durcissable par rayonnement actinique selon l'une quelconque des revendications 1 à 7, dans laquelle le composé (B) a un groupe (méth)acryloyle et/ou un groupe vinyle.

9. Composition durcissable par rayonnement actinique selon l'une quelconque des revendications 1 à 8, comprenant en outre un (méth)acrylate polyfonctionnel (C) ne contenant pas de groupe époxy, d'anhydride d'acide, de groupe isocyanate ou de groupe amino.

10. Composition durcissable par rayonnement actinique selon l'une quelconque des revendications 1 à 9, comprenant en outre un (méth)acrylate (D) ayant au moins l'un parmi un groupe époxy, un anhydride d'acide et un groupe isocyanate.

11. Composition durcissable par rayonnement actinique selon l'une quelconque des revendications 1 à 10, dans laquelle un composant contenu autre que le (méth)acrylate (A), le composé (B), le (méth)acrylate (C) et le (méth)acrylate (D) n'a pas de groupe acide.

12. Encre durcissable par rayonnement actinique comprenant : la composition durcissable par rayonnement actinique selon l'une quelconque des revendications 1 à 11 ; et un pigment.

13. Procédé de production d'un matériau imprimé comprenant : le transfert de la composition durcissable par rayonnement actinique selon l'une quelconque des revendications 1 à 11 ou de l'encre durcissable par rayonnement actinique selon la revendication 12 sur un film ; puis l'irradiation du film avec un rayonnement actinique.

14. Procédé de production d'un matériau imprimé selon la revendication 13, dans lequel une surface du film a été soumise à un traitement corona.
